# EUROPÄISCHE PATENTSCHRIFT

(11) **EP 0 825 056 B1**
(45) Veröffentlichungstag und Bekanntmachung des Hinweises auf die Patenterteilung: **10.05.2000**
(21) Anmeldenummer: 97110440.1
(22) Anmeldetag: 26.06.1997
(51) Int. Cl.: B60K 28/14, F02M 63/02

(54) **Vorrichtung und Verfahren zur Kraftstoffzumessung bei einem Kraftfahrzeug**
Method and device for supplying fuel in a motor vehicle
Procédé et dispositif d'alimentation en carburant pour véhicule à moteur

(30) Priorität: 14.08.1996 DE 19632753
(43) Veröffentlichungstag der Anmeldung: 25.02.1998
(73) Patentinhaber: ROBERT BOSCH GMBH, 70442 Stuttgart (DE)
(72) Erfinder: Grosser, Martin, 70825 Korntal-Münchingen (DE); Hinrichsen, Claus, Dr., 70435 Stuttgart (DE)

(56) Entgegenhaltungen:
- EP-A- 0 321 894
- WO-A-92/10667
- DE-A- 4 212 337
- DE-A- 4 440 700
- GB-A- 2 162 250
- US-A- 5 201 385

## Beschreibung

### Stand der Technik

Die Erfindung geht aus von einer Vorrichtung beziehungsweise von einem Verfahren zur Kraftstoffzumessung bei einem Kraftfahrzeug.

Bei Kraftfahrzeugen mit einer Brennkraftmaschine wird der Kraftstoff mit Hilfe einer Elektrokraftstoffpumpe aus einem Kraftstoffbehälter gefördert und über Kraftstoffleitungen den Einspritzventilen zugeführt. Bei Brennkraftmaschinen mit Hochdruckeinspritzung, insbesondere bei Brennkraftmaschinen mit Selbstzündung, schließt sich an die Elektrokraftstoffpumpe eine weitere Pumpe an, die einen sehr hohen Druck in einen Hochdruckbereich der Kraftstoffversorgung erzeugt, der mit den Einspritzventilen in Verbindung steht.

Aus der DE,A1,44 40 700 ist eine solche Hochdruckeinspritzung bekannt, bei der die durch einen Sensor aufgenommene Beschleunigung mit einem festgesetzten Wert verglichen wird, bei dessen Überschreitung ein Unfall wie eine Kollision diagnostiziert wird. Überschreitet die sensierte Beschleunigung den festgesetzten Wert, so wird der der Druck im Hochdruckbereich massiv abgebaut, damit bei einer Beschädigung der Hochdruckleitung infolge eines starken Aufpralls ein Austreten von Kraftstoff mit hohem Druck verhindert wird. Der Beginn der Reduktion des Hochdrucks liegt also schon im zeitlichen Bereich eines Aufpralls.

Antiblockierregelsysteme sind in vielfältiger Weise bekannt, wobei hier nur beispielhaft auf das Dokument Bosch Technische Berichte, Band 7 (1980) Heft 2 verwiesen werden soll. Bei solchen Antiblockierregelsystemen werden die Bremssysteme der Fahrzeugräder derart angesteuert, daß eine Änderung der Bremswirkung, im allgemeinen des Bremsdrucks, abhängig von einem Instabilitätswert stattfindet. Dieser Instabilitätswert wird dabei abhängig von der detektierten Radbewegung, im allgemeinen der Raddrehzahl, erzeugt. Insbesondere ist dieser Instabilitätswert eine Kombination der momentanen Radumfangsverzögerung bzw. Radumfangsbeschleunigung mit dem Bremsschlupf.

Darüber hinaus sind Fahrdynamikregelsysteme bekannt, bei denen eine die Fahrdynamik des Fahrzeugs beeinflussende und/oder repräsentierende Größe erfaßt wird, wie beispielsweise die Gierwinkelgeschwindigkeit, der Lenkwinkel und/oder die Querbeschleunigung des Fahrzeugs. Abhängig von diesen erfaßten Größen werden die Bremssysteme der Räder zur Erhöhung der Fahrstabilität angesteuert. Ein solches System ist beispielsweise bekannt aus ATZ Automobiltechnische Zeitschrift 96 (1994) "FDR-Fahrdynamikregelung von Bosch".

Der Erfindung liegt die Aufgabe zugrunde, die Gefahr des unter hohem Druck austretenden Kraftstoffs sicher und kostengünstig zu vermeiden.

Diese Aufgabe wird durch die Merkmale der Ansprüche 1 und 7 gelöst.

### Vorteile der Erfindung

Gegenstand der Erfindung ist eine Vorrichtung nach Anspruch 1 zur Kraftstoffzumessung bei einem Kraftfahrzeug, bei dem der Kraftstoff in einem Speicher einen vorgebbaren Druck aufweist. Weiterhin sind neben Mitteln zur Reduzierung dieses Drucks bei dem Kraftfahrzeug weitere Mittel zur Abgabe eines fahrsicherheitsrelevanten Signals vorgesehen. Der Druck wird dabei in Reaktion auf das fahrsicherheitsrelevante Signal reduziert.

Der Kern der Erfindung besteht darin, daß bei dem Kraftfahrzeug die Mittel zur Abgabe des fahrsicherheitsrelevanten Signals derart ausgestaltet sind, daß zur Erhöhung der Fahrstabilität die Bremswirkung an wenigstens einer Fahrzeugradbremse modifiziert werden kann, wobei das fahrsicherheitsrelevante Signal in Abhängigkeit von einer vorgebbaren Modifikation der Bremswirkung abgegeben wird.

Der erfindungsgemäße Gedanke geht davon aus, daß zeitlich vor einem möglichen Unfall beziehungsweise vor einer möglichen Kollision, bei der der Hochdruckteil der Kraftstoffzufuhr unter Umständen beschädigt werden kann, die in die Fahrzeugbremsen eingreifenden Sicherheitssysteme in Aktion treten. Senkt man den Kraftstoffdruck in Abhängigkeit von solchen Bremseingriffen, so gelangt man zu einer relativ frühzeitigen Sicherheitsabsenkung des Kraftstoffdrucks. Eine möglicherweise mit der Druckabsenkung einhergehende Motormomentenreduzierung ist dabei wenig relevant. Darüber hinaus kann die Druckabsenkung in gewissen Grenzen derart getätigt werden, daß es zu keiner wesentlichen Motormomentenreduzierung kommt. Hierzu kann beispielsweise mit der Druckreduzierung die Einspritzzeitdauer verlängert werden.

Bei modernen Kraftfahrzeugsystemen ist das Motorsteuergerät im allgemeinen mit dem auf die Bremsen zugreifenden Antiblockier- oder Fahrdynamiksteuergerät durch ein Bus-System verbunden. Ein wesentlicher Vorteil der Erfindung besteht darin, daß der durch die Erfindung erreichte Sicherheitsvorteil lediglich durch einen gewissen, relativ kostengünstig zu realisierenden Software-Aufwand zu erzielen ist.

In einer vorteilhaften Ausgestaltung der Erfindung ist vorgesehen, daß die obengenannten zweiten Mittel als Antiblockiersystem (ABS) ausgebildet sind, bei dem eine Blockierneigung eines Fahrzeugrades erkannt wird. Bei solchen an sich bekannten Antiblockiersystemen wird in Reaktion auf ein Erkennung einer Blockierneigung vorgebbaren Ausmaßes die Bremswirkung am Rad derart modifiziert, daß die Bremswirkung konstant gehalten oder reduziert wird. In dieser Ausgestaltung ist vorgesehen, daß das fahrsicherheitsrelevante Signal in Abhängigkeit von dieser Modifikation abgegeben wird. In dieser Ausgestaltung ist also vorgesehen, daß mit einer erkannten Blockierneigung, also mit Einsetzen des aktiven ABS-Regelbetriebs, der Kraftstoffdruck reduziert wird.

Bei einem ABS-System wird im allgemeinen der Radschlupf und/oder die Radverzögerung wenigstens abhängig von erfaßten Raddrehgeschwindigkeiten ermittelt. Zur Erkennung der Blockierneigung wird dann der ermittelte Radschlupf und/oder die ermittelte Radverzögerung mit Schwellwerten verglichen.

Bei einer weiteren Ausgestaltung der Erfindung ist vorgesehen, daß die zweiten Mittel als Fahrdynamikregelsystem (FDR) ausgebildet sind, bei dem das Gierverhalten und/oder das Querbewegungsverhalten des Fahrzeugs erfaßt wird und mit bestimmten Sollwerten und/oder Sollverläufen verglichen wird. Hierbei wird bei einer Erkennung einer Abweichung bestimmten Ausmaßes des erfaßten Verhaltens von dem zugehörigen Sollverlauf die Bremswirkung an bestimmten Rädern derart modifiziert, daß die Abweichung minimiert wird. Das fahrsicherheitsrelevante Signal wird in diesem Fall in Abhängigkeit von der Modifikation abgegeben.

Bei solchen FDR-Systemen ist im allgemeinen vorgesehen, daß die Sollwerte und/oder Sollverläufe wenigstens abhängig von der erfaßten Fahrzeuglängsgeschwindigkeit und der erfaßten Lenkbewegung bestimmt werden.

Die erwähnten Modifikationen der Bremswirkung können durch eine Änderung des Bremsdrucks in den Radbremsen oder durch eine elektromotorisch betätigte Bremse realisiert werden.

Gegenstand der Erfindung ist ferner ein Verfahren nach Anspruch 7 zur Kraftstoffzumessung bei einem Kraftfahrzeug, bei dem der Kraftstoff in einem Speicher einen vorgebbaren Druck aufweist,wobei ein fahrsicherheitsrelevantes Signal abgegeben wird und dieser Druck in Reaktion auf das fahrsicherheitsrelevante Signal reduziert wird. Der Kern des erfindungsgemäßen Verfahrens besteht darin, daß bei dem Kraftfahrzeug zur Erhöhung der Fahrstabilität die Bremswirkung an wenigstens einer Fahrzeugradbremse modifiziert werden kann und das fahrsicherheitsrelevante Signal in Abhängigkeit von einer vorgebbaren Modifikation der Bremswirkung abgegeben wird.

### Zeichnung

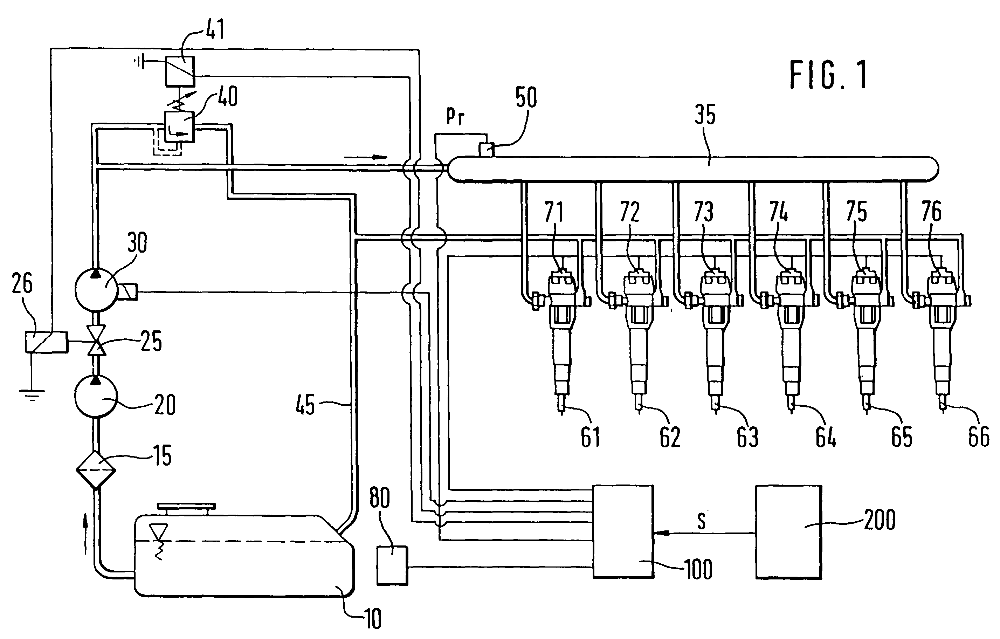

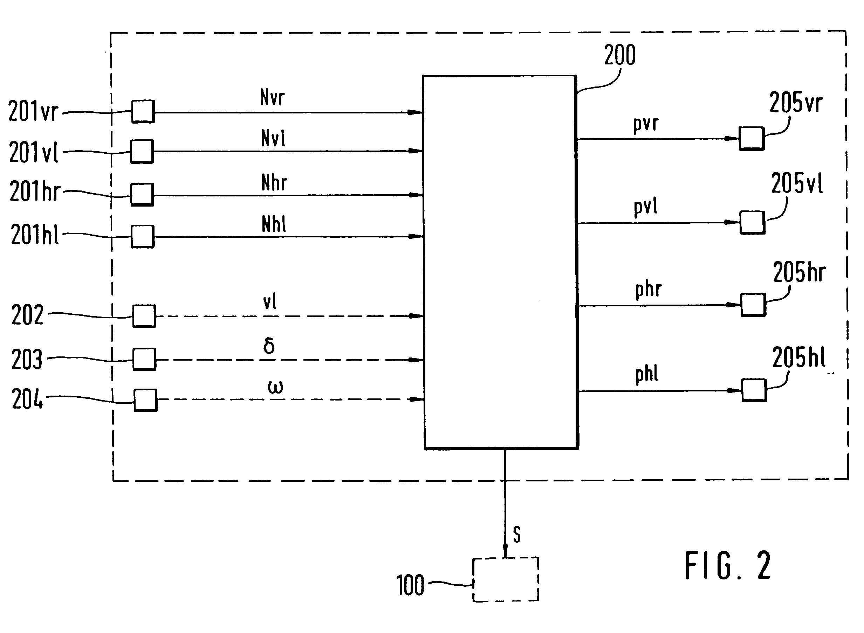

Die Erfindung wird nachstehend anhand der in den Zeichnungen dargestellten Ausführungsformen erläutert. Dabei zeigen die Figuren 1 und 2 Blockdiagramme der erfindungsgemäßen Vorrichtung.

### Ausführungsbeispiel

Anhand des folgenden Ausführungsbeispiels soll die Erfindung beispielhaft beschrieben werden.

In der Figur 1 sind die für das Verständnis des Ausführungsbeispiels erforderlichen Bestandteile eines Kraftstoffversorgungssystems einer Brennkraftmaschine mit Hochdruckeinspritzung dargestellt. Das dargestellte System wird üblicherweise als Common-Rail-System bezeichnet. Mit 10 ist ein Kraftstoffvorratsbehälter beziehungsweise Speicher bezeichnet. Dieser steht über eine Kraftstoffzuführleitung mit einem Filter 15, einer Vorförderpumpe 20, einem Absperrventil 25, einer Hochdruckförderpumpe 30 mit einem Rail 35 in Verbindung.

In der Kraftstoffzuführleitung ist zwischen der Hochdruckförderpumpe 30 und dem Rail 35 ein Druckregelventil 40 bzw. ein Druckbegrenzungsventil angeordnet. Mittels dieses Ventils ist die Zuführleitung mit einer Rücklaufleitung 45 verbindbar. Das Druckregelventil verbindet den Hochdruckbereich mit einem Niederdruckbereich. Über die Rücklaufleitung 45 gelangt der Kraftstoff zurück in den Tank 10.

Das Absperrventil 25 ist mittels einer Spule 26 betätigbar. Entsprechend ist das Ventil 40 mittels einer Spule 41 ansteuerbar. Am Rail 35 ist ein Sensor 50 angeordnet. Bei diesem Sensor 50 handelt es sich vorzugsweise um einen Drucksensor, der ein Signal bereitstellt, das dem Kraftstoffdruck pᵣ im Rail und damit dem Druck im Hochdruckbereich entspricht.

Das Rail 35 steht über jeweils eine Leitung mit den einzelnen Injektoren 61 bis 66 in Verbindung. Die Injektoren umfassen Magnetventile 71 bis 76 mittels denen der Kraftstofffluß durch die Injektoren steuerbar ist. Hierdurch wird die Einspritzdauer bestimmt. Des weiteren stehen die Injektoren mit jeweils einem Anschluß mit der Rücklaufleitung 45 in Verbindung.

Das Ausgangssignal pᵣ des Drucksensors 50 sowie die Ausgangssignale weiterer Sensoren 80 gelangen zu einer Steuereinheit 100 die wiederum die Magnetventile 71 bis 76, die Spule 26 der Vorförderpumpe, die Spule 41 des Druckregelventils 40 und die Hochdruckförderpumpe steuert.

Die Einrichtung arbeitet derart, daß die Vorförderpumpe 20, die als Elektrokraftstoffpumpe oder mechanische Pumpe ausgeführt sein kann, den Kraftstoff, der sich im Kraftstoffvorratsbehälter 10 befindet über einen Filter 15 zur Hochdruckförderpumpe 30 fördert. Die Hochdruckförderpumpe 30 fördert den Kraftstoff in das Rail 35 und baut dort einen Druck auf, der zwischen zirka 100 und 2000 bar liegt.

Zwischen der Hochdruckförderpumpe 30 und der Vorförderpumpe 20 ist ein Absperrventil 25 angeordnet, daß von der Steuereinheit 100 ansteuerbar ist, um den Kraftstofffluß zu unterbrechen. Eine Reduzierung des Kraftstoffdrucks kann durch Ansteuern des Druckregelventils 40 geschehen.

Ausgehend von den Signalen verschiedener Sensoren 80 bestimmt die Steuereinheit 100 Steuersignale zur Beaufschlagung der Magnetventile 71 bis 76 der Injektoren 61 bis 66. Durch Öffnen und Schließen der Magnetventile 71 bis 76 wird der Beginn und das Ende der Kraftstoffeinspritzung in die Brennkraftmaschine gesteuert.

Mittels des Drucksensors 50 wird der Druck pᵣ des Kraftstoffes im Rail 35 und damit im Hochdruckbereich erfaßt. Ausgehend von diesem Wert berechnet die Steuereinheit 100 ein Signal zur Beaufschlagung des Druckregelventils 40. Vorzugsweise wird der Druck durch Ansteuern des Druckregelventils 40 auf einen vorgebbaren Wert geregelt, der unter anderem von Betriebsbedingungen der Brennkraftmaschine abhängt, die mittels der Sensoren 80 erfaßt werden.

Der Steuereinheit 100 wird das fahrsicherheitsrelevante Signal S von dem Antiblockiersteuergerät (ABS) beziehungsweise von dem Fahrdynamiksteuergerät (FDR) 200 zugeführt.

In der Figur 2 ist ein solches Steuergerät 200 gezeigt. Dem Steuergerät 200 werden dabei die Ausgangssignale der Raddrehzahlsensoren 201vr, 201vl, 201hr und 201hl zugeführt, die die Raddrehgeschwindigkeit der Fahrzeugräder sensieren. Darüber hinaus wird mit den Mitteln 202 die Fahrzeuglängsgeschwindigkeit Vl erfaßt, wobei die Fahrzeuglängsgeschwindigkeit im allgemeinen als Referenzgeschwindigkeit aus den sensierten Raddrehzahlen berechnet wird.

In einem ABS-Steuergerät wird in bekannter Weise abhängig von der jeweiligen Raddrehzahl und der Fahrzeuglängsgeschwindigkeit ein Instabilitätswert abhängig von der Radverzögerung (aus der Raddrehzahl) und dem Radschlupf (aus Raddrehzahl und Fahrzeuglängsgeschwindigkeit) gebildet und mit einem Schwellwert verglichen. Überschreitet der Instabilitätswert eine Schwellwert, so wird eine Blockierneigung des Rades erkannt, woraufhin der Bremsdruck pvr, pvl, phr und phl in den Radbremsen 205hr, 205vl,205hr und 205hl konstant gehalten oder abgebaut wird.

Ist das Steuergerät 200 als Fahrdynamiksteuergerät (FDR) ausgebildet, so werden zusätzlich zu den schon erwähnten Größen der vom Fahrer aktuell eingestellte Lenkwinkel δ (Lenkwinkelsensor 203) und die Gierwinkelgeschwindigkeit ω (Drehwinkelgeschwindigkeit um die Fahrzeughochachse) erfaßt. Die erfaßte Gierwinkelgeschwindigkeit ω wird dann durch radindividuelle Bremseingriffe in bekannter Weise auf Sollwerte beziehungsweise Sollverläufe geregelt. Die Sollwerte beziehungsweise Sollverläufe werden dabei abhängig von dem Lenkwinkel δ und der Fahrzeuggeschwindigkeit Vl bestimmt.

Wird nun im Steuergerät 200 eine Blockierneigung an einem Rad und/oder eine übermäßige Abweichung des Ist-Gierverhaltens von dem Soll-Gierverhalten festgestellt, so wird neben den enstsprechenden fahrsicherheitssteigernden Bremseingriffen das fahrsicherheitsrelevante Signal S an das Motorsteuergerät 100 abgegeben. Das Signal muß aber nicht unbedingt direkt an einen Bremseingriff gekoppelt sein. Es kann auch vorgesehen sein, daß das fahrsicherheitsrelevante Signal S erst bei einer Blockierneigung und/oder einer Giergeschwindigkeitsregelabweichung bestimmten Ausmaßes abgegeben wird. Das Signal S wird also in diesem Fall erst dann abgegeben, wenn aufgrund des Radverhaltens und/oder der Fahrdynamik mit einem Unfall und damit mit einer Beschädigung des Kraftstoffspeichers 35 zu rechnen ist.

Die Abgabe des Signals S führt im Motorsteuergerät 100 dazu, daß zeitlich direkt oder indirekt der Druck im Speicher 35 abgesenkt wird. Dies kann durch eine Unterbrechung der Kraftstoffzufuhr durch ein Schließen des Absperrventils 25 un/oder durch ein wenigstens teilweise Öffnen des Druckregelventils 40 geschehen.

Durch eine Modifikation der Einspritzdauer kann in einem bestimmten Druckbereich die Absenkung des Drucks pᵣ im Speicher 35 bezüglich des Motormoments kompensiert werden.

Das heißt, daß mit der Druckreduzierung die Einspritzdauer derart gewählt wird, daß das Motormoment gar nicht oder nur wenig durch die Druckabsenkung abgesenkt wird.

## Patentansprüche

1. Vorrichtung zur Kraftstoffzumessung bei einem Kraftfahrzeug, wobei das Kraftfahrzeug erste Mittel (200) aufweist, die derart ausgestaltet sind, daß zur Erhöhung der Fahrstabilität die Bremswirkung an wenigstens einer Fahrzeugradbremse modifiziert werden kann, und der Kraftstoff in einem Speicher (35) einen vorgebbaren Druck (pᵣ) aufweist, wobei die ersten Mittel (200) zur Erzeugung eines fahrsicherheitsrelevanten Signal (S) in Abhängigkeit von einer vorgebbaren Modifikation der Bremswirkung vorgesehen sind und die Vorrichtung Mittel (100, 40, 41, 25, 26) zur Reduktion des Drucks (pᵣ) in Reaktion auf das fahrsicherheitsrelevante Signal (S) aufweist.

2. Vorrichtung nach Anspruch 1, dadurch gekennzeichnet, daß die ersten Mittel (200) als Antiblockiersystem (200) ausgebildet sind, bei dem eine Blockierneigung eines Fahrzeugrades erkannt wird und bei einer Erkennung einer Blockierneigung vorgebbaren Ausmaßes die Bremswirkung am Rad derart modifiziert wird, daß sie konstant gehalten oder reduziert wird, wobei in Abhängigkeit von dieser Modifikation das fahrsicherheitsrelevante Signal (S) abgegeben wird.

3. Vorrichtung nach Anspruch 2, dadurch gekennzeichnet, daß die ersten Mittel (200) als Antiblockiersystem ausgebildet sind, wobei der Radschlupf und/oder die Radverzögerung wenigstens abhängig von erfaßten Raddrehgeschwindigkeiten ermittelt wird und zur Erkennung der Blockierneigung der ermittelte Radschlupf und/oder die ermittelte Radverzögerung mit Schwellwerten verglichen werden.

4. Vorrichtung nach Anspruch 1, dadurch gekennzeichnet, daß die ersten Mittel (200) als Fahrdynamikregelsystem ausgebildet sind, bei dem das Gierverhalten und/oder das Querbewegungsverhalten des Fahrzeugs erfaßt wird und mit bestimmten Sollwerten und/oder Sollverläufen verglichen wird, wobei bei einer Erkennung einer Abweichung bestimmten Ausmaßes des erfaßten Verhaltens von dem zugehörigen Sollverlauf die Bremswirkung am Rad derart modifiziert wird, daß die Abweichung minimiert wird, wobei in Abhängigkeit von der Modifikation das fahrsicherheitsrelevante Signal abgegeben wird.

5. Vorrichtung nach Anspruch 4, dadurch gekennzeichnet, daß die Sollwerte und/oder Sollverläuf wenigstens abhängig von der erfaßten Fahrzeuglängsgeschwindigkeit (Vl) und der erfaßten Lenkbewegung (δ) bestimmt werden.

6. Vorrichtung nach Anspruch 1, dadurch gekennzeichnet, daß die Modifikation der Bremswirkung durch eine Änderung des Bremsdrucks in den Radbremsen oder durch eine elektromotorisch betätigte Bremse realisiert wird.

7. Verfahren zur Kraftstoffzumessung bei einem Kraftfahrzeug, wobei zur Erhöhung der Fahrstabilität bei dem Kraftfahrzeug die Bremswirkung an wenigstens einer Fahrzeugradbremse modifiziert werden kann und der Kraftstoff in einem Speicher (35) einen vorgebbaren Druck (pᵣ) aufweist, mit folgenden Schritten:
- Erzeugung eines fahrsicherheitsrelevanten Signal (S) in Abhängigkeit von einer vorgebbaren Modifikation der Bremswirkung,
- Reduktion des Drucks (pᵣ) in Reaktion auf das fahrsicherheitsrelevante Signal (S).

## Claims

1. Apparatus for fuel metering in a motor vehicle, in which case the motor vehicle has first means (200) which are designed such that the braking effect on at least one vehicle wheel brake can be modified in order to improve the driving stability, and the fuel in a reservoir (35) is at a pressure (pᵣ) which can be predetermined, in which case the first means (200) are provided in order to produce a signal (S) which is relevant to driving safety, as a function of a modification of the braking effect which can be predetermined, and the apparatus has means (100, 40, 41, 25, 26) for reducing the pressure (pᵣ) as a reaction to the signal (S) which is relevant to driving safety.

2. Apparatus according to Claim 1, characterized in that the first means (200) are designed as an antilock braking system (200) in which any tendency of a vehicle wheel to lock is identified, and if any tendency to lock to an extent which can be predetermined is identified, the braking effect at the wheel is modified such that it is kept constant or is reduced, with the signal (S) which is relevant to driving safety being emitted as a function of this modification.

3. Apparatus according to Claim 2, characterized in that the first means (200) are designed as an antilock braking system, with the wheel slip and/or the wheel deceleration being determined at least as a function of detected wheel rotation speeds, and the determined wheel slip and/or the determined wheel deceleration being compared with threshold values in order to identify the tendency to lock.

4. Apparatus according to Claim 1, characterized in that the first means (200) are designed as a driving dynamic control system, in which the pitch behaviour and/or the lateral movement behaviour of the vehicle are/is detected and are/is compared with specific nominal values and/or nominal profiles, with the braking effect at the wheel being modified if a discrepancy to a specific extent is identified in the detected behaviour from the associated nominal profile, in such a way that the discrepancy is minimized, with the signal which is relevant to driving safety being emitted as a function of the modification.

5. Apparatus according to Claim 4, characterized in that the nominal values and/or nominal profile are/is determined at least as a function of the detected vehicle longitudinal speed (V1) and the detected steering movement (δ).

6. Apparatus according to Claim 1, characterized in that the modification of the braking effect is achieved by varying the brake pressure in the wheel brakes or by a brake operated by an electric motor.

7. Method for fuel metering in a motor vehicle, in which case the braking effect at at least one vehicle wheel brake can be modified in order to improve the driving stability and the fuel in a reservoir (35) is at a pressure (pᵣ) which can be predetermined, comprising the following steps:
- production of a signal (S) which is relevant to driving safety, as a function of a modification of the braking effect which can be predetermined,
- reduction of the pressure (pᵣ) as a reaction to the signal (S) which is relevant to driving safety.

## Revendications

1. Dispositif d'alimentation du carburant d'un véhicule automobile, selon lequel le véhicule comporte des premiers moyens (200) conçus pour modifier l'effet de freinage d'au moins un frein de roue du véhicule pour augmenter la stabilité de roulement et dans un accumulateur (35) le carburant est à une pression prédéterminée (pᵣ), les premiers moyens (200) étant prévus pour générer un signal (S) concernant la sécurité de roulement en fonction d'une modification prédéterminée de l'effet de freinage, et le dispositif comprend des moyens (100, 40, 41, 25, 26) pour réduire la pression (Pᵣ) en réaction au signal (S) de sécurité de conduite.

2. Dispositif selon la revendication 1,
caractérisé en ce que
les premiers moyens sont constitués par le système antiblocage (200) qui détecte une tendance au blocage d'une roue du véhicule et en cas de reconnaissance d'une tendance du blocage, l'effet de freinage sur une roue est modifié dans une mesure prédéterminée pour rester constante ou être réduite en émettant le signal (S) de sécurité de conduite en fonction de cette modification.

3. Dispositif selon la revendication 2,
caractérisé en ce que
les premiers moyens (200) sont constitués par un système antiblocage, selon lequel on détermine le patinage de roue et/ou la décélération de roue au moins en fonction des vitesses de rotation de roue détectées et pour reconnaître la tendance au blocage, on compare le patinage de roue déterminé et/ou la décélération de roue déterminée à des seuils.

4. Dispositif selon la revendication 1,
caractérisé en ce que
les premiers moyens (200) sont constitués par un système de régulation dynamique de suspension selon lequel on détecte le comportement à la giration et/ou le comportement aux mouvements transversaux du véhicule, on compare à certaines valeurs de seuil et/ou courbes de seuil, et, en cas de détection d'une déviation, d'une amplitude déterminée entre le comportement détecté et le comportement de consigne correspondant, on modifie l'effet de frein sur la roue pour minimiser la déviation et on émet le signal (S) de sécurité de conduite en fonction de la modification,.

5. Dispositif selon la revendication 4,
caractérisé en ce qu'
on définit les valeurs de consigne et/ou les courbes de consigne au moins en fonction de la vitesse longitudinale (V1) détectée du véhicule et du mouvement de braquage (δ) détecté.

6. Dispositif selon la revendication 1,
caractérisé en ce qu'
on modifie l'effet de frein en modifiant la pression de frein dans les freins de roue ou par un frein commandé par un moteur électrique.

7. Dispositif de dosage de carburant d'un véhicule automobile selon lequel pour augmenter la stabilité de conduite on modifie l'effet de frein d'au moins un frein de roue du véhicule et le carburant dans l'activateur (35) est à une pression prédéterminée (pᵣ), procédé selon lequel :
- on génère un signal (S) de sécurité de conduite en fonction d'une modification prédéterminée de l'effet de freinage,
- on réduit la pression (pᵣ) en réaction au signal (S) de sécurité de conduite.
